# EUROPEAN PATENT APPLICATION

(11) **EP 3 418 867 A1**
(43) Date of publication of application: **26.12.2018**
(21) Application number: 16891308.5
(22) Date of filing: 29.12.2016
(51) Int. Cl.: G06F 3/041, G06F 3/0488

(54) **TOUCH OPERATION METHOD BASED ON INTERACTIVE ELECTRONIC WHITE BOARD AND SYSTEM THEREOF**

(30) Priority: 22.02.2016 CN 201610097570
(71) Applicant: Guangzhou Shirui Electronics Co., Ltd., Guangzhou, Guangdong 510663 (CN)
(72) Inventor: CHENG, Yao, Guangzhou Guangdong 510663 (CN)
(74) Representative: Appleyard Lees IP LLP
(86) International application number: PCT/CN2016/113201
(87) International publication number: WO 2017/143860

(57) **Abstract**

A touch operating method and system based on an interactive electronic white board, by detecting touch operation data such as pressure sensitive data, touch width data and touch coordinate data, then identifying the touch operation data as a corresponding control instruction according to a preset algorithm, and sending the control instruction to the interactive electronic whiteboard, enables a user to realize a corresponding operation by directly touching the interactive electronic whiteboard without clicking on the respective functional button, thereby improving the operation convenience and enhancing the user experience.

## Description

### TECHNICAL FIELD

The present invention relates to the technical field of electronic whiteboard, and in particular to a touch operating method and system based on an interactive electronic whiteboard.

### BACKGROUND

An interactive electronic whiteboard can communicate with a computer. The electronic whiteboard is connected to the computer, and the content of the computer is projected onto the screen of the electronic whiteboard using a projector. With the support of a dedicated application, an interactive collaborative meeting or teaching environment with a large screen can be constructed. A specific positioning pen, instead of a mouse, is used to operate on the whiteboard, which enables the application to run, and perform operations such as editing, annotating, and saving files, where these operations are realized on the computer using a keyboard and a mouse.

The four most commonly used functions of the electronic whiteboards include writing, erasing, moving of a page, and moving of a page element. In a conventional solution, the electronic whiteboard generally provides four corresponding touch buttons to enable the user to manually switch four different functional states. However, this solution requires the user to frequently click on the four buttons when using the electronic whiteboard, which is inconvenient to operate and result in a non-smooth user experience.

### SUMMARY

With respect to the above problem in the prior art, the present invention provides a touch operating method and system based on an interactive electronic whiteboard, which can reduce operational steps, thereby improving operation convenience and enhancing the user experience.

A technical solution of a touch operating method based on an interactive electronic whiteboard of the present invention is as below, comprising:
receiving touch operation data through the interactive electronic whiteboard, where the touch operation data includes pressure sensitive data, touch width data and touch coordinate data;
identifying the touch operation data as a corresponding control instruction according to a preset algorithm;
sending the control instruction to the interactive electronic whiteboard.

A touch operating system based on an interactive electronic whiteboard of the present invention comprising:
a detecting module, configured to receive touch operation data through the interactive electronic whiteboard, where the touch operation data includes pressure sensitive data, touch width data and touch coordinate data;
an identifying module, configured to identify the touch operation data as a corresponding control instruction according to a preset algorithm; and
a response module, configured to send the control instruction to the interactive electronic whiteboard.

The method and the system thereof, by detecting the touch operation data such as the pressure sensitive data, the touch width data and the touch coordinate data, then identifying the touch operation data as the corresponding control instruction according to the preset algorithm, and sending the control instruction to the interactive electronic whiteboard, enables the user to realize the corresponding operation by directly touching the interactive electronic whiteboard without clicking on the respective function button, thereby improving the operation convenience and enhancing the user experience.

### BRIEF DESCRIPTION OF THE DRAWING

FIG. 1 is a schematic flow chart of a touch operating method based on an interactive electronic whiteboard according to an embodiment;
FIG. 2 is a schematic flow chart of an algorithm of a touch operating method based on an interactive electronic whiteboard according to a preferred implementation;
FIG. 3 is a schematic structural diagram of a touch operating system based on an interactive electronic whiteboard according to an embodiment.

### DETAILED DESCRIPTION OF THE EMBODIMENTS

In order to make the objects, technical solutions and advantages of the present invention more apparent, the present invention will be further described in detail with reference to the accompanying drawings.

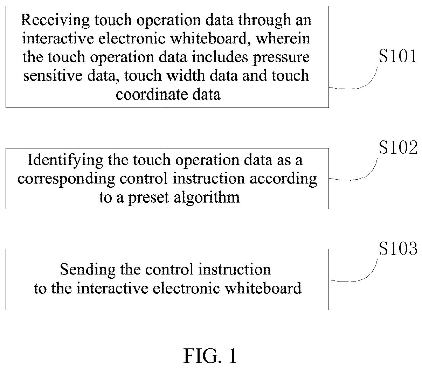

Referring to FIG. 1, a schematic flow diagram of a touch operating method based on an interactive whiteboard according to an embodiment comprises steps S101 to S103:

S101, receiving touch operation data through an interactive electronic whiteboard, wherein the touch operation data includes pressure sensitive data, touch width data and touch coordinate data.

The pressure sensitive data is a pressure when a touch pressure reaches a preset pressure value; the touch width data is a maximum distance between any two point coordinates among the point coordinates touched at the same time on the touch screen; and the touch coordinate data is a coordinate value when the touched point coordinates are within a preset range value.

Further, the interactive electronic whiteboard includes a touch frame; the pressure sensitive data is detected and transmitted to the interactive electronic whiteboard through a pressure sensor, and the touch width data and touch coordinate data are detected through the touch frame. The pressure sensor may be a sensor capable of detecting pressure data, such as a pressure sensitive pen or a pressure sensitive screen. The pressure sensor senses the pressure and wirelessly transmits the pressure data to the interactive electronic whiteboard.

For example, the pressure sensitive data can be detected through the pressure sensor at the tip of the pressure sensitive pen, and the touch width data and the touch coordinate data can be detected through the touch frame in the electronic whiteboard. These three kinds of data respectively correspond to information such as touch pressure, touch area and touch point movement of the touch behavior.

S102, identifying the touch operation data as a corresponding control instruction according to a preset algorithm.

The pressure sensitive data, the touch width data and the touch coordinate data detected in step S101 are identified as a corresponding control instruction through the preset algorithm, which enables the electronic whiteboard to generate the corresponding control instruction according to different touch operation data without clicking on the respective function buttons, thereby reducing the operation steps.

Further, the step S102 can be implemented by: determining whether the touch coordinate data is detected, if the touch coordinate data is detected, determining whether the pressure sensitive data is detected; if the pressure sensitive data is detected, outputting a writing control instruction, if the pressure sensitive data is not detected, determining whether the touch width data is detected; if the touch width data is detected and the touch width data is greater than a preset threshold, outputting an erasing control instruction, if the touch width data is not detected or the touch width data is less than or equal to the preset threshold, determining whether the touch coordinate data is within a preset range; if the touch coordinate data is within the preset range, outputting a moving control instruction of a page element ; if the touch coordinate data is not within the preset range, outputting a moving control instruction of a page.

S103, sending the control instruction to the interactive electronic whiteboard.

In this step, the corresponding operation on the interactive electronic whiteboard by sending the respective control instruction to the interactive electronic whiteboard, so that the user can enter the corresponding operation mode to complete the corresponding operation without clicking on the respective function buttons, thereby improving the operation convenience and enhancing the user experience.

Further, after step S103, the method further includes a step of controlling the interactive electronic whiteboard to respond to the control instruction: controlling the interactive electronic whiteboard to perform a response of a writing operation according to the writing control instruction, controlling the interactive electronic whiteboard to perform a response of a erasing operation according to the erasing control instruction, controlling the interactive electronic whiteboard to perform a response of a page element moving operation according to the page element moving control instruction, and controlling the interactive electronic whiteboard to perform a response of a page moving operation according to the page moving control instruction.

The page element moving operation includes moving, scaling and rotating of the page element; the page moving operation includes moving, scaling and rotating of the page. The response of the writing operation causes the interactive electronic whiteboard to enter into a writing mode, the response of the erasing operation causes the interactive electronic whiteboard to enter into a erasing mode, the response of the page moving operation causes the interactive electronic whiteboard to enter into a page mode, and the response of the page element moving operation causes the interactive electronic whiteboard to enter into a page element mode. This step enables directly enter into the corresponding operation mode through the touch operation of the user according to the response of the respective control instruction, thereby further improving the operation convenience.

Further, after step S103, the method further comprises storing the control instruction, and responding to the control instruction corresponding to the touch operation data when the touch operation data is detected. By storing the control instruction, directly responding the control instruction corresponding to the touch operation data when the touch operation data is detected , thereby shortening the response time of the operation and improving the fluency of the operation.

In this embodiment, by detecting touch operation data such as pressure sensitive data, the touch width data and the touch coordinate data, and then identifying the touch operation data as the corresponding control instruction according to the preset algorithm, and sending the control instruction to the interactive electronic whiteboard, the user can realize the corresponding operation by directly touching the interactive electronic whiteboard without clicking on the respective function button, thereby improving the operation convenience and enhancing the user experience.

The following is a preferred implementation of a touch operating method based on an interactive whiteboard of the present invention, including steps 1 to 4:

Step 1: writing on an electronic whiteboard through a tip of a pressure sensitive pen.

Step 2: detecting a pressure sensitive data by a pressure sensor of the pen tip, and detecting touch width data and touch coordinate data by a touch frame of the electronic whiteboard. These three kinds of data respectively reflect information such as touch pressure, touch area, and touch point movement of the user's touch behavior.

Step 3: according to the detected pressure sensitive data, the touch width data and the touch coordinate data, determining an actual operation (writing, erasing, page element moving, page moving, etc.) of the user through a preset algorithm. Then transmitting a calculation result to a software UI (User Interface, user interface) interaction layer.

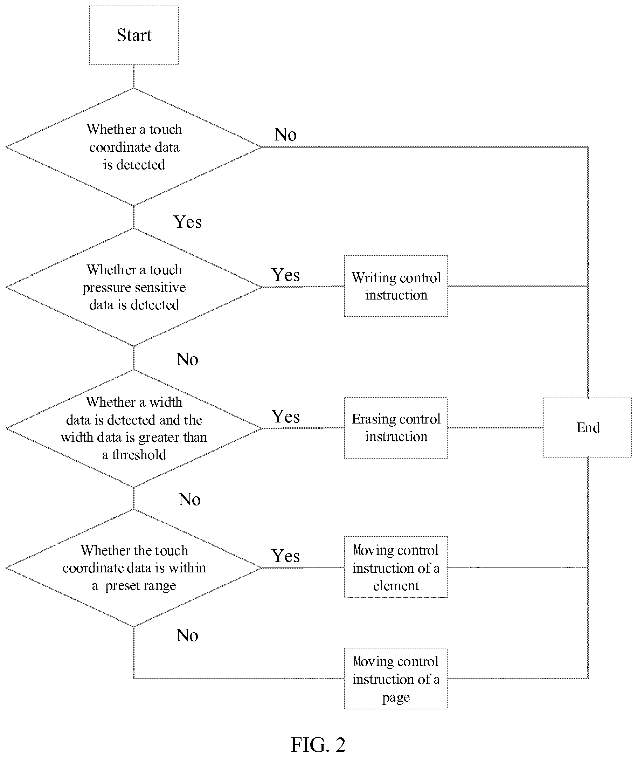

Specifically, according to the following algorithm, the pressure sensitive data, the touch width data and the touch coordinate data are integrated and identified as an operation instruction desired by a user. FIG. 2 shows a schematic flowchart of an algorithm of a touch operating method based on an interactive electronic whiteboard according to a preferred embodiment of the present invention: determining whether a touch coordinate data is detected, and if the touch coordinate data is detected, determining whether a pressure sensitive data is detected; if the pressure sensitive data is detected, outputting a writing control instruction, if the pressure sensitive data is not detected, determining whether a touch width data is detected; if the touch width data is detected and the touch width data is greater than a preset threshold, outputting an erasing control instruction, if the touch width data is not detected or the touch width data is less than or equal to the preset threshold, determining whether the touch coordinate data is within a preset range; if the touch coordinate data is within the preset range, outputting a moving control instruction of a page element; if the touch coordinate data is not within the preset range, outputting a moving control instruction of a page. Through this algorithm, an output operation instruction (one of writing, erasing, page element movement, page movement) can be outputted. It should be noted that, in the algorithm, the determination of whether the pressure sensitive data is detected, whether the touch width data is detected and whether the touch coordinate data is within the preset range may be performed concurrently after determining whether the touch coordinate data is detected, thereby improving determination efficiency.

Step 4: the software UI interaction layer receives the output control instruction and responds to the user's operation. Specifically, the software UI interaction layer controls the interactive electronic whiteboard to perform a response of a writing operation according to the writing control instruction, controls the interactive electronic whiteboard to perform a response of a erasing operation according to the erasing control instruction, controls the interactive electronic whiteboard to perform a response of a page element moving operation according to the page element moving control instruction, and controls the interactive electronic whiteboard to perform a response of a page moving operation according to the page moving control instruction. For example, when writing on the screen with an electronic pen, the electronic whiteboard enters into an writing mode, and the user can directly write on the screen; when the user touches the screen with a finger, the electronic whiteboard enters into a page or page element mode, and the user can move, scale, rotate a page or a single page element therein; when the user touches the screen with the palm of the user's hand, the electronic whiteboard enters into a erasing mode, and the user can erase a handwriting directly on the screen.

According to the method, identifying the touch operation data as the corresponding control instruction according to the preset algorithm by detecting the touch operation data such as the pressure sensitive data, the touch width data and the touch coordinate data, and sending the control instruction to the interactive electronic whiteboard, enables the user to realize the corresponding operation by directly touching the interactive electronic whiteboard without clicking on the respective function button, thereby improving the operation convenience and enhancing the user experience.

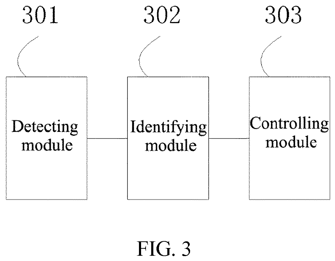

The present invention further provides a touch operating system based on an interactive electronic whiteboard, please make reference to the structure diagram of the touch operating system based on the interactive electronic whiteboard shown in FIG. 3, comprising a detecting module 301, an identifying module 302 and a controlling module 303.

The detecting module 301 is configured to receive touch operation data through an interactive electronic whiteboard, wherein the touch operation data includes pressure sensitive data, touch width data and touch coordinate data; the identifying module 302 is configured to identify the touch operation data as a corresponding control instruction according to a preset algorithm; and the controlling module 303 is configured to send the control instruction to the interactive electronic whiteboard.

In the embodiment, by detecting touch operation data such as pressure sensitive data, the touch width data and the touch coordinate data, and then identifying the touch operation data as the corresponding control instruction according to the preset algorithm, and sending the control instruction to the interactive electronic whiteboard, the user could realize the corresponding operation by directly touching the interactive electronic whiteboard without clicking on the respective function button, thereby improving the operation convenience and enhancing the user experience.

In one embodiment, the interactive electronic whiteboard includes a touch frame; the detecting module 301 includes a detecting submodule for detecting the pressure sensitive data, and transmitting the pressure sensitive data to the interactive electronic whiteboard through a pressure sensor, and detecting the touch width data and touch coordinate data through the touch frame.

In one embodiment, the identifying module 302 includes a determination submodule configured to determine whether the touch coordinate data is detected, and determine whether the pressure sensitive data is detected if the touch coordinate data is detected; a first instruction output submodule, configured to output a writing control instruction if the pressure sensitive data is detected, and determine whether the touch width data is detected if the pressure sensitive data is not detected; a second instruction output submodule, configured to output an erase control instruction if the touch width data is detected and the touch width data is greater than a preset threshold, and determine whether the touch coordinate data is within a preset range if the touch width data is not detected or the touch width data is less than or equal to the preset threshold; a third instruction output submodule, configured to output a moving control instruction of a page element if the touch coordinate data is within a preset range; and a fourth instruction output submodule, configured to output a moving control instruction of a page if the touch coordinate data is not within the preset range.

In one embodiment, the touch operating system based on the interactive electronic whiteboard further includes a response module, configured to control the interactive electronic whiteboard to perform a response of a writing operation, according to the writing control instruction, control the interactive electronic whiteboard to perform a response of a erasing operation according to the erasing control instruction, control the interactive electronic whiteboard to perform a response of a page element moving operation according to the page element moving control instruction, and control the interactive electronic whiteboard to perform a response of a page moving operation according to the page moving control instruction. The page element moving operation includes moving, scaling and rotating of the page element; the page moving operation includes moving, scaling and rotating of the page.

In one embodiment, the touch operating system based on the interactive electronic whiteboard further includes: a storage module, configured to store a control instruction, and respond to the control instructions corresponding to the touch operation data when the touch operation data is detected. Through the storage module, the response time of the operation can be shortened, and the fluency of the operation can be improved.

The technical features of the above-mentioned embodiments may be combined in any combination. For the sake of brevity of description, not all possible combinations of the technical features of the above embodiments are described. However, as long as there are no contradictions the combination of these technical features should be considered as the scope of the present description.

The above-mentioned embodiments are merely illustrative of several embodiments of the present invention, and the description thereof is more specific and detailed, but is not to be construed as limiting the scope of the invention. It should be noted that a number of variations and modifications may be made by those skilled in the art without departing from the spirit and scope of the invention, and are within the scope of the present description. Therefore, the scope of the invention should be determined by the appended claims.

## Claims

1. A touch operating method based on an interactive electronic whiteboard, **characterized by** comprising:
receiving touch operation data through the interactive electronic whiteboard, wherein the touch operation data includes pressure sensitive data, touch width data and touch coordinate data;
identifying the touch operation data as a corresponding control instruction according to a preset algorithm;
sending the control instruction to the interactive electronic whiteboard.

2. The touch operating method based on an interactive electronic whiteboard according to claim 1, **characterized in that** wherein the interactive electronic whiteboard comprises a touch frame, and wherein the receiving the touch operation data through the interactive electronic whiteboard comprises:
detecting the pressure sensitive data and transmitting the pressure sensitive data to the interactive electronic whiteboard through a pressure sensor, and
detecting the touch width data and the touch coordinate data through the touch frame.

3. The touch operating method based on an interactive electronic whiteboard according to claim 1, **characterized in that** wherein the identifying the touch operation data as the corresponding control instruction according to the preset algorithm comprises:
determining whether the touch coordinate data is detected, if the touch coordinate data is detected, determining whether the pressure sensitive data is detected;
if the pressure sensitive data is detected, outputting a writing control instruction, and if the pressure sensitive data is not detected, determining whether the touch width data is detected;
if the touch width data is detected and the touch width data is greater than a preset threshold, outputting an erasing control instruction, if the touch width data is not detected or the touch width data is less than or equal to the preset threshold, determining whether the touch coordinate data is within a preset range;
if the touch coordinate data is within the preset range, outputting a moving control instruction of a page element;
if the touch coordinate data is not within the preset range, outputting a moving control instruction of a page.

4. The touch operating method based on an interactive electronic whiteboard according to claim 3, **characterized in that** further comprising a step of controlling the interactive electronic whiteboard to respond to the control instruction:
controlling the interactive electronic whiteboard to perform a response of a writing operation according to the writing control instruction, controlling the interactive electronic whiteboard to perform a response of an erasing operation according to the erasing control instruction, controlling the interactive electronic whiteboard to perform a response of a page element moving operation according to the page element moving control instruction, and controlling the interactive electronic whiteboard to perform a response of a page moving operation according to the page moving control instruction.

5. The touch operating method based on an interactive electronic whiteboard according to claim 4, **characterized in that** wherein the page element moving operation comprises moving, scaling and rotating of the page element, and wherein the page moving operation includes moving, scaling and rotating of the page.

6. A touch operating system based on an interactive electronic whiteboard, **characterized by** comprising:
a detecting module, configured to receive touch operation data through the interactive electronic whiteboard, wherein the touch operation data includes pressure sensitive data, touch width data and touch coordinate data;
an identifying module, configured to identify the touch operation data a corresponding control instruction according to a preset algorithm;
a controlling module, configured to send the control instruction to the interactive electronic whiteboard.

7. The touch operating system based on an interactive electronic whiteboard according to claim 1, **characterized in that** wherein the interactive electronic whiteboard comprises a touch frame;
the detecting module comprises:
a detecting submodule, configured to detect the pressure sensitive data, transmit the pressure sensitive data to the interactive electronic whiteboard through a pressure sensor, and detect the touch width data and the touch coordinate data through the touch frame.

8. The touch operating system based on an interactive electronic whiteboard according to claim 1, **characterized in that** wherein the identifying module comprises:
a determining submodule, configured to determine whether the touch coordinate data is detected, and determine whether the pressure sensitive data is detected if the touch coordinate data is detected;
a first instruction output submodule, configured to output a writing control instruction if the pressure sensitive data is detected, and determine whether the touch width data is detected if the pressure sensitive data is not detected;
a second instruction output submodule, configured to output an erasing control instruction if the touch width data is detected and the touch width data is greater than a preset threshold, and determine whether the touch coordinate data is within a preset range if the touch width data is not detected or the touch width data is less than or equal to the preset threshold;
a third instruction output submodule, configured to output a moving control instruction of a page element if the touch coordinate data is within the preset range; and
a fourth instruction output submodule, configured to output a moving control instruction of a page if the touch coordinate data is not within the preset range.

9. The touch operating system based on an interactive electronic whiteboard according to claim 6, **characterized in that** further comprising:
a response module, configured to control the interactive electronic whiteboard to perform a response of a writing operation according to the writing control instruction, control the interactive electronic whiteboard to perform a response of a erasing operation according to the erasing control instruction, control the interactive electronic whiteboard to perform a response of a page element moving operation according to the page element moving control instruction, and control the interactive electronic whiteboard to perform a response of a page moving operation according to the page moving control instruction.

10. The touch operating system based on an interactive electronic whiteboard according to claim 9, **characterized in that** wherein the page element moving operation comprises moving, scaling and rotating of the page element, and wherein the page moving operation includes moving, scaling and rotating of the page.
